(19) Europäisches Patentamt
European Patent Office
Office européen des brevets

(11) EP 4 614 827 A1

(12) **EUROPEAN PATENT APPLICATION**
published in accordance with Art. 153(4) EPC

(43) Date of publication:
**10.09.2025 Bulletin 2025/37**

(21) Application number: **22964488.5**

(22) Date of filing: **04.11.2022**

(51) International Patent Classification (IPC):
***H04B 7/06*** *(2006.01)* ***H04J 99/00*** *(2009.01)*

(52) Cooperative Patent Classification (CPC):
**H04B 7/06; H04J 99/00**

(86) International application number:
**PCT/JP2022/041226**

(87) International publication number:
**WO 2024/095472 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
- **MATSUMURA, Yuki**
  **Tokyo 100-6150 (JP)**
- **NAGATA, Satoshi**
  **Tokyo 100-6150 (JP)**
- **SUN, Weiqi**
  **Beijing 100190 (CN)**
- **WANG, Jing**
  **Beijing 100190 (CN)**
- **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes a receiving section to which, for a non-codebook based physical downlink shared channel (PUSCH), dynamic switching between a first scheme using multi-panel simultaneous transmission space division multiplexing (SDM) and a second scheme with transmission of the PUSCH associated with one panel is applied, the receiving section being configured to receive an indication indicating the second scheme, and a control section that applies a first sounding reference signal (SRS) resource indicator (SRI) field in downlink control information (DCI). According to one aspect of the present disclosure, it is possible to appropriately apply at least one of an SRI field and a TPMI field.

FIG. 9A

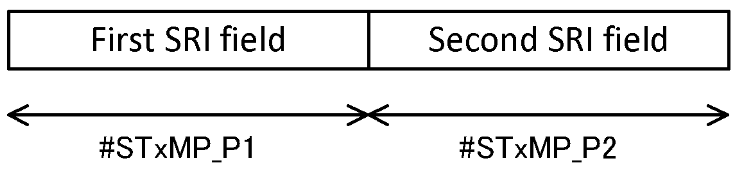


EP 4 614 827 A1

FIG. 9B

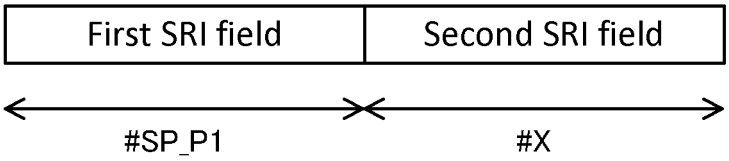
First SRI field
Second SRI field
#SP_P1
#X

FIG. 9C

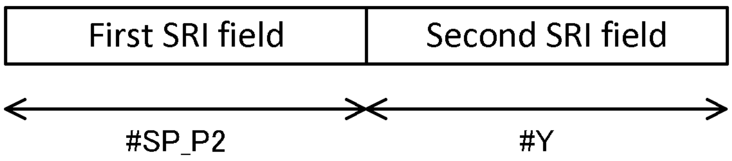
First SRI field
Second SRI field
#SP_P2
#Y

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), a terminal (user terminal, User Equipment (UE)) can use one of a plurality of panels (plurality of beams) for uplink (UL) transmission. However, a study has not been sufficiently made on control in a case where simultaneous transmission using the plurality of panels is supported.

For example, a study has not been sufficiently made on a method for applying at least one of a sounding reference signal (SRS) resource indicator (SRI) field and a transmitted precoding matrix indicator (TPMI) field in a case where for a codebook based or non-codebook based physical downlink shared channel (PUSCH), dynamic switching between a first scheme using multi-panel simultaneous transmission space division multiplexing (SDM) and a second scheme with transmission of the PUSCH associated with one panel is applied. Unless this is made clear, degradation in system performance, such as throughput reduction, may occur.

Thus, an object of the present disclosure is to provide a terminal, a radio communication method, and a base station that appropriately apply at least one of an SRI field and a TPMI field. Solution to Problem

A terminal according to one aspect of the present disclosure includes a receiving section to which, for a non-codebook based physical downlink shared channel (PUSCH), dynamic switching between a first scheme using multi-panel simultaneous transmission space division multiplexing (SDM) and a second scheme with transmission of the PUSCH associated with one panel is applied, the receiving section being configured to receive an indication indicating the second scheme, and a control section that applies a first sounding reference signal (SRS) resource indicator (SRI) field in downlink control information (DCI).

### Advantageous Effects of Invention

According to one aspect of the present disclosure, it is possible to appropriately apply at least one of an SRI field and a TPMI field.

### Brief Description of Drawings

[FIG. 1] FIG. 1 is a diagram to show an example of association between precoder types and TPMI indices.
[FIG. 2] FIGS. 2A to 2C are diagrams to show examples of multi-panel transmission.

[FIG. 3] FIGS. 3A to 3C are diagrams to show other examples of the multi-panel transmission.
[FIG. 4] FIG. 4 is a diagram to show application of an SRS resource set indication field of Rel. 17.
[FIG. 5] FIG. 5 is a diagram to show an example of an SRS resource set indication field applied to dynamic switching between single-panel transmission (STRP), single-panel transmission, and an STxMP SDM scheme.
[FIG. 6] FIGS. 6A and 6B are diagrams to show examples of a size of a first SRI field and a size of a second SRI field in option 1 of a first embodiment.
[FIG. 7] FIGS. 7A to 7C are diagrams to show examples of a size of a first TPMI field and a size of a second TPMI field in option 1 of a second embodiment.
[FIG. 8] FIGS. 8A to 8C are diagrams to show examples of a size of a first TPMI field and a size of a second TPMI field in option 2 of the second embodiment.
[FIG. 9] FIGS. 9A to 9C are diagrams to show examples of a size of a first SRI field and a size of a second SRI field in option 1 of a third embodiment.
[FIG. 10] FIGS. 10A to 10C are diagrams to show examples of a size of a first SRI field and a size of a second SRI field in option 2 of the third embodiment.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.
[FIG. 15] FIG. 15 is a diagram to show an example of a vehicle according to one embodiment.

Description of Embodiments

(PUSCH Precoder)

For NR, it is studied that a UE supports at least one of codebook (CB) based transmission and non-codebook (NCB) based transmission.
For example, it is studied that the UE judges a precoder (precoding matrix) for at least one of CB based and NCB based uplink shared channel (Physical Uplink Shared Channel (PUSCH)) transmission by using at least a sounding reference signal (SRS) resource indicator (SRS Resource Indicator (SRI)).
In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.
The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by precoding information and number of layers field ("Precoding information and number of layers" field) of the DCI.
The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").
The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of PMIs specified by the TPMI, by codebookSubset.
Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."
Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.
Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

FIG. 1 is a diagram to show an example of association between precoder types and TPMI indices. FIG. 1 corresponds to a table of a precoding matrix W for single-layer (rank 1) transmission using 4 antenna ports in DFT-s-OFDM (Discrete Fourier Transform spread OFDM, where transform precoding is enabled).

In FIG. 1, when a precoder type (codebookSubset) is fullyAndPartialAndNonCoherent, the UE is notified of a TPMI of one of 0 to 27 for the single-layer transmission. When the precoder type is partialAndNonCoherent, the UE is configured with a TPMI of one of 0 to 11 for the single-layer transmission. When the precoder type is nonCoherent, the UE is configured with a TPMI of one of 0 to 3 for the single-layer transmission.

Note that, as shown in FIG. 1, precoding matrices each having only one non-zero element of each column may be referred to as a non-coherent codebook. Precoding matrices each having a certain number of non-zero elements of each column (except for all the elements) may be referred to as a partial coherent codebook. Precoding matrices each having all the elements of each column being non-zero may be referred to as a fully coherent codebook.

The non-coherent codebook and the partial coherent codebook may each be referred to as an antenna selection precoder. The fully coherent codebook may be referred to as a non-antenna selection precoder.

Note that, in the present disclosure, the partial coherent codebook may correspond to the codebook obtained by removing a codebook corresponding to a TPMI specified for the UE configured with a non-coherent codebook subset (for example, an RRC parameter "codebookSubset" = "nonCoherent"), from codebooks (precoding matrices) corresponding to TPMIs specified by DCI for codebook based transmission for the UE configured with a partial coherent codebook subset (for example, an RRC parameter "codebookSubset" = "partialAndNonCoherent") (in other words, a codebook with TPMIs = 4 to 11 in a case of single-layer transmission with 4 antenna ports).

Note that, in the present disclosure, the fully coherent codebook may correspond to the codebook obtained by removing a codebook corresponding to a TPMI specified for the UE configured with a partial coherent codebook subset (for example, an RRC parameter "codebookSubset" = "partialAndNonCoherent"), from codebooks (precoding matrices) corresponding to TPMIs specified by DCI for codebook based transmission for the UE configured with a fully coherent codebook subset (for example, an RRC parameter "codebookSubset" = "fullyAndPartialAndNonCoherent") (in other words, a codebook with TPMIs = 12 to 27 in a case of single-layer transmission with 4 antenna ports).

(Spatial Relations for SRS and PUSCH)

The UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate one of a periodic SRS (P-SRS), a semi-persistent SRS (SP-SRS), and an aperiodic SRS (A-SRS, AP-SRS). Note that the UE may periodically (or, after activation, periodically) transmit the P-SRS and the SP-SRS, and may transmit the A-SRS, based on an SRS request of DCI.

The usage (RRC parameter "usage," L1 (Layer-1) parameter "SRS-SetUse") may be, for example, beam management (beamManagement), codebook based transmission (codebook (CB)), non-codebook based transmission (nonCodebook (NCB)), antenna switching, or the like. An SRS with codebook based transmission or non-codebook based transmission usage may be used to determine a precoder for codebook based or non-codebook based PUSCH transmission based on an SRI.

For example, in a case of codebook based transmission, the UE may determine a precoder for the PUSCH transmission, based on an SRI, a transmitted rank indicator (TRI), and a transmitted precoding matrix indicator (TPMI). In a case of non-codebook based transmission, the UE may determine a precoder for the PUSCH transmission, based on an SRI.

The SRS resource information may include an SRS resource ID (SRS-ResourceId), the number of SRS ports, an SRS port number, a transmission Comb, SRS resource mapping (for example, a time and/or frequency resource location, a resource offset, a resource periodicity, the number of repetitions, the number of SRS symbols, an SRS bandwidth, or the like), hopping-related information, an SRS resource type, a sequence ID, SRS spatial relation information, and the like.

The SRS spatial relation information (for example, an RRC information element "spatialRelationInfo") may indicate information on a spatial relation between a certain reference signal and an SRS. The certain reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The SRS spatial relation information may include, as an index of the above-described certain reference signal, at least one of an SSB index, a CSI-RS resource ID, and an SRS resource ID.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The SRS spatial relation information may include a serving cell index, a BWP index (BWP ID), and the like corresponding to the above-described certain reference signal.

In NR, uplink signal transmission may be controlled based on the presence or absence of beam correspondence (BC). The BC may be, for example, a capability of a certain node (for example, the base station or the UE) to determine a beam (transmit beam or Tx beam) used for signal transmission, based on a beam (receive beam or Rx beam) used for signal reception.

Note that the BC may be referred to as transmit/receive beam correspondence (Tx/Rx beam correspondence), beam reciprocity, beam calibration, calibrated/non-calibrated, reciprocity calibrated/non-calibrated, a level of correspondence, a level of coincidence, and so on.

For example, when the BC is absent, the UE may transmit an uplink signal (for example, a PUSCH, a PUCCH, an SRS, or the like) by using a beam (spatial domain transmission filter) identical to that of an SRS (or SRS resource) indicated by the base station, based on a measurement result of one or more SRSs (or SRS resources).

On the other hand, when the BC is present, the UE may transmit an uplink signal (for example, a PUSCH, a PUCCH, an SRS, or the like) by using a beam (spatial domain transmission filter) identical to or corresponding to a beam (spatial domain reception filter) used for reception of a certain SSB or CSI-RS (or CSI-RS resource).

Regarding a certain SRS resource, when spatial relation information related to an SSB or CSI-RS and an SRS is configured (for example, when the BC is present), the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam of the SSB or CSI-RS and a UE transmit beam of the SRS are the same.

Regarding a certain SRS (target SRS) resource, when spatial relation information related to another SRS (reference SRS) and the SRS (target SRS) is configured (for example, when the BC is absent), the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam of the reference SRS and a UE transmit beam of the target SRS are the same.

The UE may determine, based on a value of a certain field (for example, an SRS resource indicator (SRI) field) in DCI (for example, DCI format 0_1), a spatial relation for a PUSCH scheduled by the DCI. Specifically, the UE may use, for PUSCH transmission, spatial relation information (for example, an RRC information element "spatialRelationInfo") for an SRS resource determined based on the value of the certain field (for example, the SRI).

When codebook based transmission is used for the PUSCH, the UE may be configured with two SRS resources by RRC, and one of the two SRS resources may be indicated for the UE by DCI (1-bit certain field). When non-codebook based transmission is used for the PUSCH, the UE may be configured with four SRS resources by the RRC, and one of the four SRS resources may be indicated for the UE by the DCI (2-bit certain field). RRC reconfiguration is necessary for use of a spatial relation other than the two or four spatial relations configured by the RRC.

Note that a DL-RS is configurable for spatial relations for the SRS resources used for the PUSCH. For example, for an SP-SRS, the UE is configured with spatial relations for a plurality of (for example, up to 16) SRS resources by RRC, and one of the plurality of SRS resources can be indicated for the UE by a MAC CE.

(Multi-panel Transmission)

In a UE of Rel. 15 and Rel. 16, only one beam and panel are used for UL transmission at one timing (FIG. 2A). For Rel. 17, it is studied that simultaneous UL transmission to one or more TRPs is performed with a plurality of beams and a plurality of panels to improve UL throughput and reliability.

For simultaneous UL transmission using a plurality of beams and a plurality of panels, reception by one TRP including a plurality of panels (FIG. 2B) or reception by two TRPs including an ideal backhaul (FIG. 2C) is under study. A single PDCCH for scheduling a plurality of PUSCHs (for example, simultaneous transmissions of PUSCH #1 and PUSCH #2) is under study. It is studied that panel-specific transmission is supported and a panel ID is introduced.

The base station may configure or indicate panel-specific transmission for UL transmission by using UL TCI or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relation information).

<Multi-panel UL Transmission Scheme>

A multi-panel UL transmission scheme or candidates for the multi-panel UL transmission scheme may be at least one of schemes 1 to 3 below (multi-panel UL transmission schemes 1 to 3). Only one of schemes 1 to 3 may be supported. A plurality of schemes including at least one of schemes 1 to 3 may be supported, and one of the plurality of schemes may be configured for the UE.

<<Scheme 1>>

Scheme 1 is coherent multi-panel UL transmission.

A plurality of panels may be synchronized with each other. All the layers are mapped to all the panels. A plurality of analog beams are indicated. An SRS resource indicator (SRI) field may be enhanced. This scheme may use up to four layers for UL.

In an example in FIG. 3A, the UE maps one codeword (CW) or one transport block (TB) to L layers (PUSCH (1, 2, ..., L)) to transmit L layers from each of the two panels. Panel #1 and panel #2 are coherent with each other. Scheme 1 enables a gain by diversity to be obtained. A total number of layers in the two panels is 2L. When a maximum value of the total number of layers is 4, a maximum value of the number of layers in one panel is 2.

<<Scheme 2>>

Scheme 2 is non-coherent multi-panel UL transmission with one codeword (CW) or transport block (TB).

A plurality of panels may not be synchronized with each other. Different layers are mapped to different panels and one CW or TB for PUSCHs from the plurality of panels. Layers corresponding to one CW or TB may be mapped to the plurality of panels. This scheme may use up to four layers or up to eight layers for UL. When up to eight layers are supported, this scheme may support one CW or TB using up to eight layers.

In an example in FIG. 3B, the UE maps 1 CW or 1 TB to k layers (PUSCH (1, 2, ..., k)) and L-k layers (PUSCH (k+1, k+2, ..., L)) to transmit k layers and L-k layers from panel #1 and panel #2, respectively. Scheme 2 enables a gain by multiplexing and diversity to be obtained. A total number of layers in the two panels is L.

<<Scheme 3>>

Scheme 3 is non-coherent multi-panel UL transmission with two CWs or TBs.

A plurality of panels may not be synchronized with each other. Different layers are mapped to different panels and two CWs or TBs for PUSCHs from the plurality of panels. Layers corresponding to one CW or TB may be mapped to one panel. Layers corresponding to a plurality of CWs or TBs may be mapped to different panels. This scheme may use up to four layers or up to eight layers for UL. When up to eight layers are supported, this scheme may support up to four layers per CW or TB.

In an example in FIG. 3C, the UE maps CW #1 or TB #1 and CW #2 or TB #2 of the two CWs or 2 TBs to k layers (PUSCH (1, 2, ..., k)) and L-k layers (PUSCH (k+1, k+2, ..., L)), respectively, to transmit k layers and L-k layers from panel #1 and panel #2, respectively. Scheme 3 enables a gain by multiplexing and diversity to be obtained. A total number of layers in the two panels is L.

(Study Items on Rel. 18)

For MIMO in Rel. 18, support of 8Tx and support of multi-panel simultaneous transmission (Simultaneous Transmission across Multiple Panels (STxMP)) are under study. For example, enhancement of a UL DMRS, an SRS, an SRI, and a TPMI (including a codebook) for enabling 8Tx UL operation supporting more than four layers to be performed for each UE is under study. For Customer Premises Equipment (CPE) / Fixed Wireless Access (FWA) / in-vehicle/industrial equipment (if applicable), studies have been performed mainly in FR2 and multi-TRP under assumption of up to 2 TRPs and up to 2 panels to facilitate multi-panel simultaneous transmission for improvement in UL throughput/reliability.

A space division multiplexing (SDM) scheme for a single-DCI multi-panel simultaneous transmission PUSCH is under study. In the SDM scheme, a UE separately precodes different layers / DMRS ports for one PUSCH and performs simultaneous transmission from two different UE panels by using one codeword (CW). Alternatively, whether the SDM scheme supports two CWs and allows simultaneous transmission from two different panels is under study.

Support of two SRS resource sets for CB or NCB, support of two TPMI fields for two SRS resource sets (two panels / two TRPs), and support of two SRI fields for two SRS resource sets (two panels / two TRPs) are under study. It has been agreed that dynamic switching between an STxMP SDM scheme and STRP transmission is supported. Note that the STRP transmission means that PUSCH transmission is associated with one panel / TRP / SRS resource set.

(TDM MTRP PUSCH of Rel. 17)

In Rel. 17, different PUSCH repetitions are associated with different beams / TRPs / SRS resource sets. In a TDM MTRP PUSCH of Rel. 17, an SRS resource set indication field indicates dynamic switching between MTRP transmission and STRP transmission (FIG. 4). When a codepoint "00" (index = 0) or a codepoint "01" (index = 1) is indicated, STRP is applied, a first SRI field and a first TPMI field are applied, and a second SRI field and a second TPMI field are reserved. When a codepoint "10" (index = 2) and a codepoint "11" (index = 3) are indicated, MTRP is applied, and the first and second SRI fields and the first and second TPMI fields are applied.

(Analysis)

As described above, in future radio communication systems (for example, NR), a terminal can use one of a plurality of panels (plurality of beams) for UL transmission. However, a study has not been sufficiently made on control in a case where simultaneous transmission using the plurality of panels is supported. For example, a study has not been sufficiently made on a method for applying at least one of an SRI field and a TPMI field in a case where for a codebook based or non-codebook based PUSCH, dynamic switching between a first scheme using multi-panel simultaneous transmission space division multiplexing (SDM) and a second scheme with transmission of the PUSCH associated with one panel is applied. Unless this is made clear, degradation in system performance, such as throughput reduction, may occur.

For example, in a case where sTRP transmission is indicated in consideration of dynamic switching between an STXMP SDM scheme and STRP transmission, it remains unclear which SRI field is to be used and which TPMI field is to be used, in codebook (CB) based PUSCH transmission. It also remains unclear which SRI field is to be used in non-codebook (NCB) based PUSCH transmission. In a case of an SRI field for CB, a size of the SRI field depends on the number of SRS resources in an SRS resource set. In a case of an SRI field for NCB, a size of the SRI field depends on the number of SRS resources in an SRS resource set, and a maximum rank. In a case of a TPMI field for CB, a size of the TPMI field depends on the number of antenna ports, a maximum rank, and a full power mode. Therefore, it is preferable that sizes of SRI fields and TPMI fields be studied in consideration of a maximum rank that differs between a first panel with STxMP SDM, a second panel with STxMP SDM, the first panel with sTRP, and the second panel with sTRP, and the number of SRS resources that differs between the first panel and the second panel.

Thus, the inventors of the present invention came up with the idea of a terminal that appropriately applies at least one of an SRI field and a TPMI field.

Embodiments according to the present disclosure will be described in detail with reference to the drawings as follows.

The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, "drop," "stop," "cancel," "puncture," "rate-match," "postpone," "not transmit," and the like may be interchangeably interpreted.

In the present disclosure, STxMP, multi-panel simultaneous transmission, multi-panel simultaneous UL transmission, and multi-panel simultaneous (UL) transmission using multi-DCI may be interchangeably interpreted. The multi-panel simultaneous transmission may be a plurality of simultaneous UL transmissions from a plurality of panels. "Simultaneous" may be at least parts of the plurality of UL transmissions temporally overlap each other. In the present disclosure, to be supported and to be configured/indicated may be interchangeably interpreted. In the present disclosure, transmission power and output power may be interchangeably interpreted. In the present disclosure, determination by a UE and configuration/indication by a network (base station / gNB) may be interchangeably interpreted.

In the present disclosure, a panel, a panel ID, a TRP, a UE capability value index, a TCI state, an SRI, an SRS resource set, an SRS resource set ID, a CORESET pool index (CORESETPoolIndex), a layer group, an antenna port group, a beam, and a TCI state may be interchangeably interpreted. In the present disclosure, two PUSCHs (PUSCH transmissions) overlapping each other may mean at least parts of the two PUSCHs (PUSCH transmissions) temporally overlapping each other.

Multi-panel simultaneous transmission being configured may mean that a plurality of pieces of DCI associated with different CoresetPoolIndex schedule different PUSCHs. A plurality of PUSCHs associated with different CoresetPoolIndex/panels, and a plurality of PUSCHs scheduled by a plurality of pieces of DCI associated with different CoresetPoolIndex/panels may be interchangeably interpreted. A configuration of multi-panel simultaneous transmission using multi-DCI being received, and multi-panel simultaneous transmission being configured may be interchangeably interpreted.

(Radio Communication Method)

In the present disclosure, a panel/TRP may refer to an SRS resource set, a layer group, an antenna port group, a UE capability value set, a beam, and a TCI state. In the present disclosure, a first/second SRS resource set may correspond to an SRS resource set with a lower/higher ID. STRP transmission means that PUSCH transmission is associated with one panel / TRP / SRS resource set. STxMP SDM (STxMP SDM scheme) means that different layers of a PUSCH are associated with different panels / TRPs / SRS resource sets.

STxMP SDM associated with a first panel is described as STxMP_P1. STxMP SDM associated with a second panel is described as STxMP _P2. STRP associated with a first panel is described as SP_P1. STRP associated with a second panel is described as SP_P2.

<Dynamic Switching Between STxMP SDM Scheme and STRP Transmission>

In dynamic switching between the STxMP SDM scheme and the STRP transmission, when STxMP SDM is dynamically indicated, at least one of (1) and (2) below is assumed.

(1) For a CB/NCB PUSCH, a first SRI field and a second SRI field are associated with a first panel / TRP / SRS resource set and a second panel / TRP / SRS resource set, respectively.
(2) In a case of a CB PUSCH, a first TPMI field and a second TPMI field are associated with a first panel / TRP / SRS resource set and a second panel / TRP / SRS resource set, respectively.

For indication of dynamic switching between STRP and STxMP, a specific field of DCI may be used. For example, at least one of (1) and (2) below may be applied.

(1) The dynamic switching may be indicated for the UE by using an SRS resource set indication field. This may be similar to the SRS resource set indication field in the TDM MTRP PUSCH of Rel. 17 shown in FIG. 4. One of examples 1 to 4 below may be applied.

In the following respective examples, STxMP (order of a first SRS resource set and a second SRS resource set) means that the first X layer(s) and remaining layer(s) are associated with the first SRS resource set and the second SRS resource set, respectively. STxMP (order of the second SRS resource set and the first SRS resource set) means that the first X layer(s) and remaining layer(s) are associated with the second SRS resource set and the first SRS resource set, respectively.

(Example 1) The SRS resource set indication field being equal to 0 indicates STRP (only the first SRS resource set). The SRS resource set indication field being equal to 1 indicates STRP (only the second SRS resource set). The SRS resource set indication field being equal to 2 indicates STxMP (order of the first SRS resource set and the second SRS resource set). The SRS resource set indication field being equal to 3 indicates STxMP (order of the second SRS resource set and the first SRS resource set).

(Example 2) The SRS resource set indication field being equal to 0 indicates STRP (only the first SRS resource set). The SRS resource set indication field being equal to 1 indicates STRP (only the second SRS resource set). The SRS resource set indication field being equal to 2 indicates STxMP (order of the first SRS resource set and the second SRS resource set). The SRS resource set indication field being equal to 3 is reserved (unused).

(Example 3) The SRS resource set indication field being equal to 0 indicates STRP (only the first SRS resource set). The SRS resource set indication field being equal to 1 indicates STRP (only the second SRS resource set). The SRS resource set indication field being equal to 2 indicates STxMP (order of the second SRS resource set and the first SRS resource set). The SRS resource set indication field being equal to 3 is reserved (unused).

(Example 4) Whether the SRS resource set indication field being equal to 2 indicates STxMP (order of the first SRS resource set and the second SRS resource set) or STxMP (order of the second SRS resource set and the first SRS resource set) may be configured/indicated by RRC / MAC CE.

(2) When a joint TCI state / UL TCI state is configured, STRP or STxMP may be indicated depending on the number of joint TCI states / UL TCI states. For example, the STxMP is indicated when two joint TCI states / UL TCI states are indicated, and the STRP is indicated when one joint TCI state / UL TCI state is indicated.

FIG. 5 is a diagram to show an example of the SRS resource set indication field applied to dynamic switching between a single-panel transmission scheme (STRP) and an STxMP SDM scheme. The example in FIG. 5 corresponds to examples 1 and 2 described above. The example in FIG. 5 and the example in FIG. 4 (existing method) may be applied to the SRS resource set indication field in a case where dynamic switching between the STRP and the STxMP SDM scheme is configured and a case where the dynamic switching is not configured, respectively.

<First Embodiment>

When, for a codebook (CB) based PUSCH, dynamic switching between a multi-panel simultaneous transmission SDM scheme (first scheme) and STRP transmission (scheme with PUSCH transmission associated with one panel / TRP / SRS resource set (second scheme)) is applied (a configuration for the switching is received) and the STRP transmission (second scheme) is dynamically indicated (an indication indicating STRP (second scheme) is received), at least one of the following respective options may be applied.

[Option 1]

When STRP transmission associated with a first/second panel / TRP / SRS resource set is indicated, a UE may apply a first SRI field.

<<Size of First SRI Field>>

A size of the first SRI field may be dynamically changed between size #P1 and size #P2, depending on a transmission scheme to be applied. When multi-panel simultaneous transmission is indicated, the size of the first SRI field is size #P1 (FIG. 6A). When SP_P1 is indicated, the size of the first SRI field becomes size #P1 (FIG. 6A). When SP_P2 is indicated, the size of the first SRI field becomes size #P2 (FIG. 6B).

As another example, the size of the first SRI field may be a maximum value of size #P1 and size #P2.

Size #P1 and size #P2 may be configured by higher layer signaling. Size #P1 and size #P2 may be configured based on the number of SRS resources for each SRS resource set.

<<Size of Second SRI Field>>

When the size of the first SRI field dynamically changes, a size of a second SRI field dynamically changes between size #P2 and size #X. So as not to change the sum of the size of the first SRI field and the size of the second SRI field, each SRI field size is changed when the multi-panel simultaneous transmission / SP_P1 / SP_P2 is indicated.

When the multi-panel simultaneous transmission is indicated, the size of the second SRI field becomes size #P2 (FIG. 6A). When SP_P1 is indicated, the size of the second SRI field becomes size #P2 (FIG. 6A). When SP_P2 is indicated, the size of the second SRI field becomes size #X (FIG. 6B). Note that it is assumed that size #P1 + size #P2 = size #P2 + size #X.

When the size of the first SRI field is the maximum value of size #P1 and size #P2, the size of the second SRI field becomes size #P2.

Size #P1 is an SRI field size determined under assumption of the number of SRS resources associated with the first panel / first TRP / first SRS resource set. Size #P2 is an SRI field size determined under assumption of the number of SRS resources associated with the second panel / second TRP / second SRS resource set.

[Option 2]

When STRP transmission (second scheme) associated with a first or second panel / TRP / SRS resource set is indicated, a first SRI field and a second SRI field are each applied.

The UE applies the first SRI field when STRP transmission associated with the first panel / TRP / SRS resource set is indicated. The UE applies the second SRI field when STRP transmission associated with the second panel / TRP / SRS resource set is indicated.

A size of the first SRI field is determined under assumption of the number of SRS resources associated with the first panel / TRP / SRS resource set. A size of the second SRI field is determined under assumption of the number of SRS resources associated with the second panel / TRP / SRS resource set.

[Option 3]

When STRP transmission (second scheme) associated with a first or second panel / TRP / SRS resource set is indicated, an SRI field having a larger size may be applied.

A size of a first SRI field is determined under assumption of the number of SRS resources associated with the first panel / TRP / SRS resource set. A size of a second SRI field is determined under assumption of the number of SRS resources associated with the second panel / TRP / SRS resource set.

The UE may apply the first SRI field when the size of the first SRI field is larger than the size of the second SRI field, and STRP transmission associated with the first or second panel / TRP / SRS resource set is indicated.

The UE may apply the second SRI field when the size of the second SRI field is larger than the size of the first SRI field, and STRP transmission associated with the first or second panel / TRP / SRS resource set is indicated.

The UE may apply the first SRI field when the size of the first SRI field is the same as the size of the second SRI field, and STRP transmission associated with the first or second panel / TRP / SRS resource set is indicated.

For example, the UE may expect (assume) that the size of the first SRI field is larger than the size of the second SRI field.

[Option 4]

When STRP transmission (second scheme) associated with a first/second panel / TRP / SRS resource set is indicated, the UE may interpret first and second SRI fields as one combined field. For example, an example of one of (1) to (6) below may be applied.

(1) The first SRI field and the second SRI field are assumed to be the most significant bit (MSB) and the least significant bit (LSB), respectively.

(2) The second SRI field and the first SRI field are assumed to be the MSB and the LSB, respectively.

(3) The first/last X bits of the first SRI field, and the second SRI field are assumed to be the MSB and the LSB, respectively.

(4) The first SRI field and the first/last X bits of the second SRI field are assumed to be the MSB and the LSB, respectively.

(5) The first/last X bits of the second SRI field, and the first SRI field are assumed to be the MSB and the LSB, respectively.

(6) The second SRI field and the first/last X bits of the first SRI field are assumed to be the MSB and the LSB, respectively.

When STRP transmission associated with the first panel / TRP / SRS resource set is indicated, the above-described combined field may be used for the first panel. When STRP transmission associated with the second panel / TRP / SRS resource set is indicated, the above-described combined field may be used for the second panel.

A size of the first SRI field is determined under assumption of the number of SRS resources associated with the first panel / TRP / SRS resource set. A size of the second SRI field is determined under assumption of the number of SRS resources associated with the second panel / TRP / SRS resource set.

{Variations}

Limitation to the numbers of respective SRS resources associated with the first SRS resource set and the second SRS resource set may be provided. For example, the UE may expect that the number of SRS resources associated with the first SRS resource set / panel / TRP is greater than or the same as the number of SRS resources associated with the second SRS resource set / panel / TRP. The UE may expect that the number of SRS resources associated with the first SRS resource set / panel / TRP is the same as the number of SRS resources associated with the second SRS resource set / panel / TRP.

According to the first embodiment, it is possible to appropriately use a first/second SRI field when STRP transmission is dynamically indicated for a CB based PUSCH.

<Second Embodiment>

When, for a codebook (CB) based PUSCH, dynamic switching between a multi-panel simultaneous transmission SDM scheme (first scheme) and STRP transmission (second scheme with PUSCH transmission associated with one panel / TRP / SRS resource set) is applied (a configuration for the switching is received) and the STRP transmission (second scheme) is dynamically indicated (an indication indicating STRP (second scheme) is received), at least one of the following respective options may be applied.

[Option 1]

When STRP transmission (second scheme) associated with a first/second panel / TRP / SRS resource set is indicated, a UE may apply a first TPMI field.

<<Size of First TPMI Field>>

A size of the first TPMI field may be dynamically changed between size #STxMP_P1, size #SP_P1, and size #SP_P2, depending on a transmission scheme to be applied. When multi-panel simultaneous transmission is indicated, the size of the first TPMI field becomes size #STxMP_P1 (FIG. 7A). When SP_P1 is indicated, the size of the first TPMI field becomes size #SP_P1 (FIG. 7B). When SP_P2 is indicated, the size of the first TPMI field becomes size #SP_P2 (FIG. 7C).

As another example, the size of the first TPMI field may be a maximum value of size #STxMP_P1, size #SP_P1, and size #SP_P2.

Size #STxMP_P1, size #SP_P1, and size #SP_P2 may be configured by higher layer signaling. Size #STxMP_P1, size #SP_P1, and size #SP_P2 may be configured based on the number of SRS resources for each SRS resource set.

<<Size of Second TPMI Field>>

When the size of the first TPMI field dynamically changes, a size of a second TPMI field dynamically changes between size #STxMP_P2, size #X, and size #Y. So as not to change the sum of the size of the first TPMI field and the size of the second TPMI field, each TPMI field size is changed when the multi-panel simultaneous transmission / SP_P1 / SP_P2 is indicated.

When the multi-panel simultaneous transmission is indicated, the size of the second TPMI field becomes size #STxMP_P2 (FIG. 7A). When SP_P1 is indicated, the size of the second TPMI field becomes size #X (FIG. 7B). In this case, it is assumed that size #STxMP_P1 + size #STxMP_P2 = size #SP_P1 + size #X. When SP_P2 is indicated, the size of the second TPMI field becomes size #Y (FIG. 7C). In this case, it is assumed that size #STxMP_P1 + size #STxMP_P2 = size #SP_P2 + size #Y.

When the size of the first TPMI field is the maximum value of size #STxMP_P1, size #SP_P1, and size #SP_P2, the size of the second TPMI field becomes size #STxMP_P2.

Size #STxMP_P1 is a TPMI field size determined under assumption of the number of antenna ports / maximum ranks / full power modes associated with STxMP _P1. Size #STxMP_P2 is a TPMI field size determined under assumption of the number of antenna ports / maximum ranks / full power modes associated with STxMP _P2. Size #SP_P1 is a TPMI field size determined under assumption of the number of antenna ports / maximum ranks / full power modes associated with SP_P1. Size #SP_P2 is a TPMI field size determined under assumption of the number of antenna ports / maximum ranks / full power modes associated with SP_P2.

[Option 2]

When STRP transmission (second scheme) associated with a first or second panel / TRP / SRS resource set is indicated, a first TPMI field and a second TPMI field are each applied.

The UE applies the first TPMI field when STRP transmission associated with the first panel / TRP / SRS resource set is indicated. The UE applies the second TPMI field when STRP transmission associated with the second panel / TRP / SRS resource set is indicated.

<<Size of First TPMI Field>>

A size of the first TPMI field may be dynamically changed between size #STxMP_P1, size #SP_P1, and size #X, depending on a transmission scheme to be applied. When STxMP / SP_P1 / SP_P2 is indicated, each TPMI field size is changed so as not to change the sum of the size of the first TPMI field and the size of the second TPMI field.

When the multi-panel simultaneous transmission is indicated, the size of the first TPMI field becomes size #STxMP_P1 (FIG. 8A). When SP_P1 is indicated, the size of the first TPMI field becomes size #SP_P1 (FIG. 8B). When SP_P2 is indicated, the size of the first TPMI field becomes size #X (FIG. 8C). In this case, it is assumed that size #STxMP_P1 + size #STxMP_P2 = size #X + size #SP_P2.

As another example, the size of the first TPMI field may be a maximum value of size #STxMP_P1 and size #SP_P1.

<<Size of Second TPMI Field>>

When the size of the first TPMI field dynamically changes, a size of a second TPMI field dynamically changes between size #STxMP_P2, size #SP_P2, and size #Y. When STxMP / SP_P1 / SP_P2 is indicated, each TPMI field size is changed so as not to change the sum of the size of the first TPMI field and the size of the second TPMI field.

When the multi-panel simultaneous transmission is indicated, the size of the second TPMI field becomes size #STxMP_P2 (FIG. 8A). When SP_P1 is indicated, the size of the second TPMI field becomes size #Y (FIG. 8B). In this case, it is assumed that size #STxMP_P1 + size #STxMP_P2 = size #SP_P1 + size #Y. When SP_P2 is indicated, the size of the second TPMI field becomes size #SP_P2 (FIG. 8C).

When the size of the first TPMI field is the maximum value of size #STxMP_P1 and size #SP_P1, the size of the second TPMI field is a maximum value of size #STxMP_P2 and size #SP_P2.

Definitions of size #STxMP_P1, size #STxMP_P2, size #SP_P1, and size #SP_P2 are the same as those of option 1.

[Option 3]

When STRP transmission (second scheme) associated with a first/second panel / TRP / SRS resource set is indicated, the UE may interpret first and second TPMI fields as one combined field. For example, an example of one of (1) to (6) below may be applied.

(1) The first TPMI field and the second TPMI field are assumed to be the most significant bit (MSB) and the least significant bit (LSB), respectively.
(2) The second TPMI field and the first TPMI field are assumed to be the MSB and the LSB, respectively.
(3) The first/last X bits of the first TPMI field, and the second TPMI field are assumed to be the MSB and the LSB, respectively.

(4) The first TPMI field and the first/last X bits of the second TPMI field are assumed to be the MSB and the LSB, respectively.

(5) The first/last X bits of the second TPMI field, and the first TPMI field are assumed to be the MSB and the LSB, respectively.

(6) The second TPMI field and the first/last X bits of the first TPMI field are assumed to be the MSB and the LSB, respectively.

When STRP transmission associated with the first panel / TRP / SRS resource set is indicated, the above-described combined field may be used for the first panel. When STRP transmission associated with the second panel / TRP / SRS resource set is indicated, the above-described combined field may be used for the second panel.

The size of the first TPMI field is determined under assumption of the number of antenna ports / maximum ranks / full power modes associated with STxMP _P1. The size of the second TPMI field is determined under assumption of the number of antenna ports / maximum ranks / full power modes associated with STxMP _P2.

In option 3, the UE may expect (assume) at least one of (1) to (3) below.

(1)

$$\text{Size \#STxMP_P1} + \text{size \#STxMP_P2} \geq \text{size \#SP_P1}$$

(2)

$$\text{Size \#STxMP_P1} + \text{size \#STxMP_P2} \geq \text{size \#SP_P2}$$

(3) Definitions of size #STxMP_P1, size #STxMP_P2, size #SP_P1, and size #SP_P2 are the same as those of option 1.

{Variations}

For restrictions on the numbers of respective antenna ports / respective maximum ranks / respective full power modes associated with STxMP _P1, STxMP _P2, SP_P1, and SP_P2, at least one of (1) to (10) below may be applied.

(1) The UE expects that the number of antenna ports / maximum ranks / full power modes associated with STxMP _P1 is the same as that related to SP_P1.

(2) The UE expects that the number of antenna ports / maximum ranks / full power modes associated with STxMP _P2 is the same as that related to SP_P2.

(3) The UE expects that the number of antenna ports / maximum ranks / full power modes associated with SP_P1 is the same as that related to SP_P2.

(4) The UE expects that the number of antenna ports / maximum ranks / full power modes associated with SP_P1 is greater than or the same as that related to SP_P2.

(5) The UE expects that the number of antenna ports / maximum ranks / full power modes associated with STxMP _P1 is the same as that related to STxMP_P2.

(6) The UE expects that the number of antenna ports / maximum ranks / full power modes associated with STxMP _P1 is greater than or the same as that related to STxMP_P2.

(7) The UE expects that size #SP_P1 = size #STxMP_P1.

(8) The UE expects that size #SP_P2 = size #STxMP_P2.

(9) The UE expects that size #SP_P1 = size #SP_P2.

(10) The UE expects that size #SP_P1 ≥ size #SP_P2.

Definitions of size #STxMP_P1, size #STxMP_P2, size #SP_P1, and size #SP_P2 may be the same as those of option 1.

According to the second embodiment, it is possible to appropriately use a first/second TPMI field when STRP transmission is dynamically indicated.

<Third Embodiment>

When, for a non-codebook (NCB) based PUSCH, dynamic switching between a multi-panel simultaneous transmission SDM scheme (first scheme) and STRP transmission (second scheme with PUSCH transmission associated with one panel / TRP / SRS resource set) is applied (a configuration for the switching is received) and the STRP transmission (second scheme) is dynamically indicated (an indication indicating STRP (second scheme) is received), at least one of the following respective options may be applied.

[Option 1]

When STRP transmission (second scheme) associated with a first/second panel / TRP / SRS resource set is indicated, a UE may apply a first SRI field.

<<Size of First SRI Field>>

A size of the first SRI field may be dynamically changed between size #STxMP_P1, size #SP_P1, and size #SP_P2, depending on a transmission scheme to be applied. When multi-panel simultaneous transmission is indicated, the size of the first SRI field becomes size #STxMP_P1 (FIG. 9A). When SP_P1 is indicated, the size of the first SRI field becomes size #SP_P1 (FIG. 9B). When SP_P2 is indicated, the size of the first SRI field becomes size #SP_P2 (FIG. 9C).

As another example, the size of the first SRI field may be a maximum value of size #STxMP_P1, size #SP_P1, and size #SP_P2.

Size #STxMP_P1, size #SP_P1, and size #SP_P2 may be configured by higher layer signaling. Size #STxMP_P1, size #SP_P1, and size #SP_P2 may be configured based on the number of SRS resources for each SRS resource set.

<<Size of Second SRI Field>>

When the size of the first SRI field dynamically changes, a size of a second SRI field dynamically changes between size #STxMP_P2, size #X, and size #Y. So as not to change the sum of the size of the first SRI field and the size of the second SRI field, each SRI field size is changed when the multi-panel simultaneous transmission / SP_P1 / SP_P2 is indicated.

When the multi-panel simultaneous transmission is indicated, the size of the second SRI field becomes size #STxMP_P2 (FIG. 9A). When SP_P1 is indicated, the size of the second SRI field becomes size #X (FIG. 9B). In this case, it is assumed that size #STxMP_P1 + size #STxMP_P2 = size #SP_P1 + size #X. When SP_P2 is indicated, the size of the second SRI field becomes size #Y (FIG. 9C). In this case, it is assumed that size #STxMP_P1 + size #STxMP_P2 = size #SP_P2 + size #Y.

When the size of the first SRI field is the maximum value of size #STxMP_P1, size #SP_P1, and size #SP_P2, the size of the second SRI field becomes size #STxMP_P2.

Size #STxMP_P1 is an SRI field size determined under assumption of the number of SRS resources / maximum ranks associated with STxMP _P1. Size #STxMP_P2 is an SRI field size determined under assumption of the number of SRS resources / maximum ranks associated with STxMP _P2. Size #SP_P1 is an SRI field size determined under assumption of the number of SRS resources / maximum ranks associated with SP_P1. Size #SP_P2 is an SRI field size determined under assumption of the number of SRS resources / maximum ranks associated with SP_P2.

[Option 2]

When STRP transmission (second scheme) associated with a first or second panel / TRP / SRS resource set is indicated, a first SRI field and a second SRI field are each applied.

The UE applies the first SRI field when STRP transmission associated with the first panel / TRP / SRS resource set is indicated. The UE applies the second SRI field when STRP transmission associated with the second panel / TRP / SRS resource set is indicated.

<<Size of First SRI Field>>

A size of the first SRI field may be dynamically changed between size #STxMP_P1, size #SP_P1, and size #X, depending on a transmission scheme to be applied. When STxMP / SP_P1 / SP_P2 is indicated, each SRI field size is changed so as not to change the sum of the size of the first SRI field and the size of the second SRI field.

When the multi-panel simultaneous transmission is indicated, the size of the first SRI field becomes size #STxMP_P1 (FIG. 10A). When SP_P1 is indicated, the size of the first SRI field becomes size #SP_P1 (FIG. 10B). When SP_P2 is indicated, the size of the first SRI field becomes size #X (FIG. 10C). In this case, it is assumed that size #STxMP_P1 + size #STxMP_P2 = size #X + size #SP_P2.

As another example, the size of the first SRI field may be a maximum value of size #STxMP_P1 and size #SP_P1.

<<Size of Second SRI Field>>

When the size of the first SRI field dynamically changes, a size of a second SRI field dynamically changes between size #STxMP_P2, size #SP_P2, and size #Y. When STxMP / SP_P1 / SP_P2 is indicated, each SRI field size is changed so as not to change the sum of the size of the first SRI field and the size of the second SRI field.

When the multi-panel simultaneous transmission is indicated, the size of the second SRI field becomes size #STxMP_P2 (FIG. 10A). When SP_P1 is indicated, the size of the second SRI field becomes size #Y (FIG. 10B). In this case, it is assumed that size #STxMP_P1 + size #STxMP_P2 = size #SP_P1 + size #Y. When SP_P2 is indicated, the size of the second SRI field becomes size #SP_P2 (FIG. 10C).

When the size of the first SRI field is the maximum value of size #STxMP_P1 and size #SP_P1, the size of the second SRI field is a maximum value of size #STxMP_P2 and size #SP_P2.

Definitions of size #STxMP_P1, size #STxMP_P2, size #SP_P1, and size #SP_P2 are the same as those of option 1.

[Option 3]

When STRP transmission (second scheme) associated with a first/second panel / TRP / SRS resource set is indicated, the UE may interpret first and second SRI fields as one combined field. For example, an example of one of (1) to (6) below may be applied.

(1) The first SRI field and the second SRI field are assumed to be the most significant bit (MSB) and the least significant bit (LSB), respectively.
(2) The second SRI field and the first SRI field are assumed to be the MSB and the LSB, respectively.
(3) The first/last X bits of the first SRI field, and the second SRI field are assumed to be the MSB and the LSB, respectively.
(4) The first SRI field and the first/last X bits of the second SRI field are assumed to be the MSB and the LSB, respectively.
(5) The first/last X bits of the second SRI field, and the first SRI field are assumed to be the MSB and the LSB, respectively.
(6) The second SRI field and the first/last X bits of the first SRI field are assumed to be the MSB and the LSB, respectively.

The size of the first SRI field is determined under assumption of the number of SRS resources / maximum ranks associated with STxMP _P1. The size of the second SRI field is determined under assumption of the number of SRS resources / maximum ranks associated with STxMP _P2.

In option 3, the UE may expect (assume) at least one of (1) to (3) below.

(1)

$$\text{Size \#STxMP P1} + \text{size \#STxMP P2} \geq \text{size \#SP P1}$$

(2)

$$\text{Size \#STxMP_P1} + \text{size \#STxMP_P2} \geq \text{size \#SP_P2}$$

(3) Definitions of size #STxMP_P1, size #STxMP_P2, size #SP_P1, and size #SP_P2 are the same as those of option 1.

{Variations}

Limitation to the numbers of respective SRS resources associated with the first SRS resource set and the second SRS resource set may be provided. For example, the UE may expect that the number of SRS resources associated with the first SRS resource set / panel / TRP is greater than or the same as the number of SRS resources associated with the second SRS resource set / panel / TRP. The UE may expect that the number of SRS resources associated with the first SRS resource set / panel / TRP is the same as the number of SRS resources associated with the second SRS resource set / panel / TRP.

For restrictions on respective maximum ranks associated with STxMP _P1, STxMP _P2, SP_P1, and SP_P2, at least one of (1) to (10) below may be applied.

(1) The UE expects that the number of maximum ranks associated with STxMP _P1 is the same as that related to SP_P1.
(2) The UE expects that the number of maximum ranks associated with STxMP _P2 is the same as that related to SP_P2.
(3) The UE expects that the number of maximum ranks associated with SP_P1 is the same as that related to SP_P2.
(4) The UE expects that the number of maximum ranks associated with SP_P1 is greater than or the same as that related to SP_P2.
(5) The UE expects that the number of maximum ranks associated with STxMP _P1 is the same as that related to STxMP_P2.
(6) The UE expects that the number of maximum ranks associated with STxMP _P1 is greater than or the same as that related to STxMP _P2.
(7) The UE expects that size #SP_P1 = size #STxMP_P1.
(8) The UE expects that size #SP_P2 = size #STxMP_P2.
(9) The UE expects that size #SP_P1 = size #SP_P2.
(10) The UE expects that size #SP_P1 ≥ size #SP_P2.

Definitions of size #STxMP_P1, size #STxMP_P2, size #SP_P1, and size #SP_P2 may be the same as those of option 1.

According to the third embodiment, it is possible to appropriately use a first/second SRI field when STRP transmission is dynamically indicated for an NCB based PUSCH.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following.

- Supporting of specific processing/operation/control/information for at least one of the embodiments above
- Supporting of SDM scheme
- Supporting of SDM scheme for CB based PUSCH
- Supporting of SDM scheme for NCB based PUSCH
- Different numbers of SRS resources associated with first or second panel / TRP / SRS resource set being supported for CB-based PUSCH
- Supporting, for CB based PUSCH, of different numbers of antenna ports / maximum ranks / full power modes associated with STXMP_P1, STxMP _P2, SP_P1, and SP_P2
- Supporting, for NCB based PUSCH, of different numbers of SRS resources associated with first or second panel / TRP / SRS resource set
- Supporting, for NCB based PUSCH, of different maximum ranks associated with STxMP _P1, STxMP _P2, SP_P1, and SP_P2
- Values of X and Y in each embodiment

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information related to dynamic switching between a multi-panel simultaneous transmission SDM scheme and STRP transmission for a CB or NCB based PUSCH, any RRC parameter for a specific release (for example, Rel. 18/19), or the like.

When the UE does not support at least one of the specific UE capabilities above or is not configured with the specific information, operation of Rel. 15/16 may be applied, for example.

(Supplementary Note)

Regarding one embodiment of the present disclosure, the following supplementary notes of the invention will be given.

{Supplementary Note 1}

A terminal including:

a receiving section to which, for a codebook based physical downlink shared channel (PUSCH), dynamic switching between a first scheme using multi-panel simultaneous transmission space division multiplexing (SDM) and a second scheme with transmission of the PUSCH associated with one panel is applied, the receiving section being configured to receive an indication indicating the second scheme; and

a control section that applies at least one of a first sounding reference signal (SRS) resource indicator (SRI) field and a first transmitted precoding matrix indicator (TPMI) field in downlink control information (DCI).

{Supplementary Note 2}

The terminal according to supplementary note 1, wherein
a size of the first SRI field and a size of the first TPMI field are dynamically changed depending on a transmission scheme to be applied.

{Supplementary Note 3}

The terminal according to supplementary note 1 or 2, wherein

so as not to change a sum of a size of a first SRI field and a size of a second SRI field, each SRI field size is changed, and
so as not to change a sum of a size of a first TPMI field and a size of a second TPMI field, each TPMI field size is changed.

{Supplementary Note 4}

The terminal according to any one of supplementary notes 1 to 3, wherein

when the second scheme is indicated, the control section interprets a first SRI field and a second SRI field as one combined field, and
when the second scheme is indicated, the control section interprets a first TPMI field and a second TPMI field as one combined field.

Regarding one embodiment of the present disclosure, the following supplementary notes of the invention will further be given.

{Supplementary Note 1}

A terminal including:

a receiving section to which, for a non-codebook based physical downlink shared channel (PUSCH), dynamic switching between a first scheme using multi-panel simultaneous transmission space division multiplexing (SDM) and a second scheme with transmission of the PUSCH associated with one panel is applied, the receiving section being configured to receive an indication indicating the second scheme; and
a control section that applies a first sounding reference signal (SRS) resource indicator (SRI) field in downlink control information (DCI).

{Supplementary Note 2}

The terminal according to supplementary note 1, wherein
a size of the first SRI field is dynamically changed depending on a transmission scheme to be applied.

{Supplementary Note 3}

The terminal according to supplementary note 1 or 2, wherein
so as not to change a sum of a size of a first SRI field and a size of a second SRI field, each SRI field size is changed.

{Supplementary Note 4}

The terminal according to any one of supplementary notes 1 to 3, wherein
when the second scheme is indicated, the control section interprets a first SRI field and a second SRI field as one combined field.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.
FIG. 11 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the

DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that, for a codebook based or non-codebook based physical downlink shared channel (PUSCH), dynamic switching between a first scheme using multi-panel simultaneous transmission space division multiplexing (SDM) and a second scheme with transmission of the PUSCH associated with one panel may be applied to the transmitting/receiving section 120 that may transmit an indication indicating the second scheme.

The control section 110 may apply at least one of a first sounding reference signal (SRS) resource indicator (SRI) field and a first transmitted precoding matrix indicator (TPMI) field in downlink control information (DCI).

(User Terminal)

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that, for a non-codebook based or codebook based physical downlink shared channel (PUSCH), dynamic switching between a first scheme using multi-panel simultaneous transmission space division multiplexing (SDM) and a second scheme with transmission of the PUSCH associated with one panel may be applied to the transmitting/receiving section 220 that may receive an indication indicating the second scheme.

The control section 210 may apply at least one of a first sounding reference signal (SRS) resource indicator (SRI) field and a first transmitted precoding matrix indicator (TPMI) field in downlink control information (DCI).

A size of the first SRI field and a size of the first TPMI field may be dynamically changed depending on a transmission scheme to be applied.

So as not to change a sum of a size of a first SRI field and a size of a second SRI field, each SRI field size may be changed, and so as not to change a sum of a size of a first TPMI field and a size of a second TPMI field, each TPMI field size may be changed.

The control section 210 may, when the second scheme is indicated, interpret a first SRI field and a second SRI field as one combined field, and may, when the second scheme is indicated, interpret a first TPMI field and a second TPMI field as one combined field.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs) .

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:

a receiving section to which, for a non-codebook based physical downlink shared channel (PUSCH), dynamic switching between a first scheme using multi-panel simultaneous transmission space division multiplexing (SDM) and a second scheme with transmission of the PUSCH associated with one panel is applied, the receiving section being configured to receive an indication indicating the second scheme; and
a control section that applies a first sounding reference signal (SRS) resource indicator (SRI) field in downlink control information (DCI).

**2.** The terminal according to claim 1, wherein
a size of the first SRI field is dynamically changed depending on a transmission scheme to be applied.

**3.** The terminal according to claim 1, wherein
so as not to change a sum of a size of a first SRI field and a size of a second SRI field, each SRI field size is changed.

**4.** The terminal according to claim 1, wherein
when the second scheme is indicated, the control section interprets a first SRI field and a second SRI field as one combined field.

**5.** A radio communication method for a terminal, the radio communication method comprising:

applying, for a non-codebook based physical downlink shared channel (PUSCH), dynamic switching between a first scheme using multi-panel simultaneous transmission space division multiplexing (SDM) and a second scheme with transmission of the PUSCH associated with one panel and receiving an indication indicating the second scheme; and
applying a first sounding reference signal (SRS) resource indicator (SRI) field in downlink control information (DCI).

**6.** A base station comprising:

a transmitting section to which, for a non-codebook based physical downlink shared channel (PUSCH), dynamic switching between a first scheme using multi-panel simultaneous transmission space division multiplexing (SDM) and a second scheme with transmission of the PUSCH associated with one panel is applied, the transmitting section being configured to transmit an indication indicating the second scheme; and
a control section that applies a first sounding reference signal (SRS) resource indicator (SRI) field in downlink control information (DCI).

| TPMI index | PRECODING MATRIX W (ordered from left to right in increasing order of TPMI index) | | | | | | | |
|---|---|---|---|---|---|---|---|---|
| 0 – 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 – 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 – 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 – 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

NON-COHERENT

PARTIAL-COHERENT

FULL-COHERENT

FIG. 1

FIG. 2A

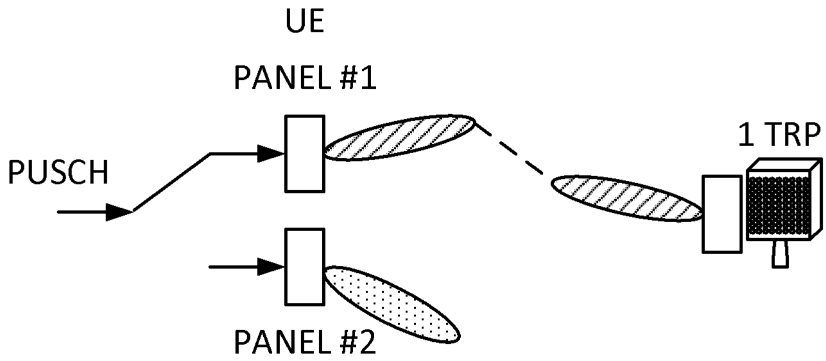


FIG. 2B

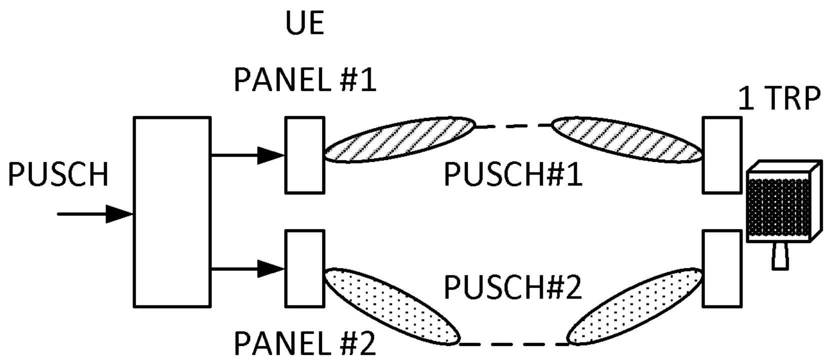


FIG. 2C

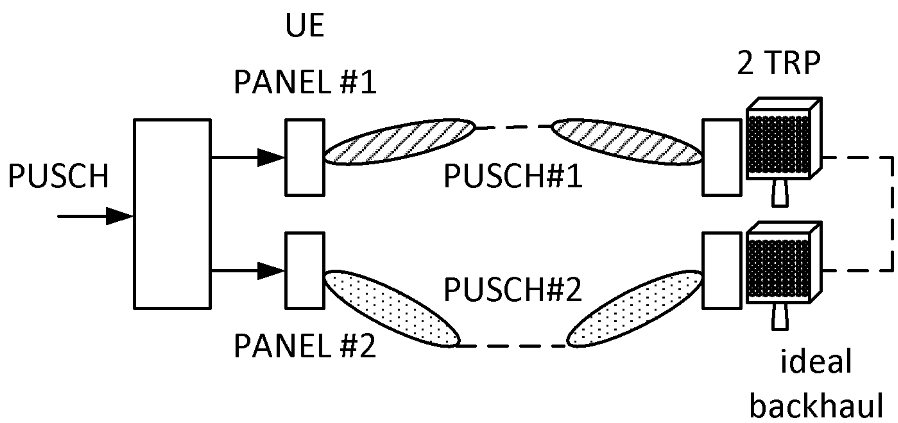

FIG. 3A

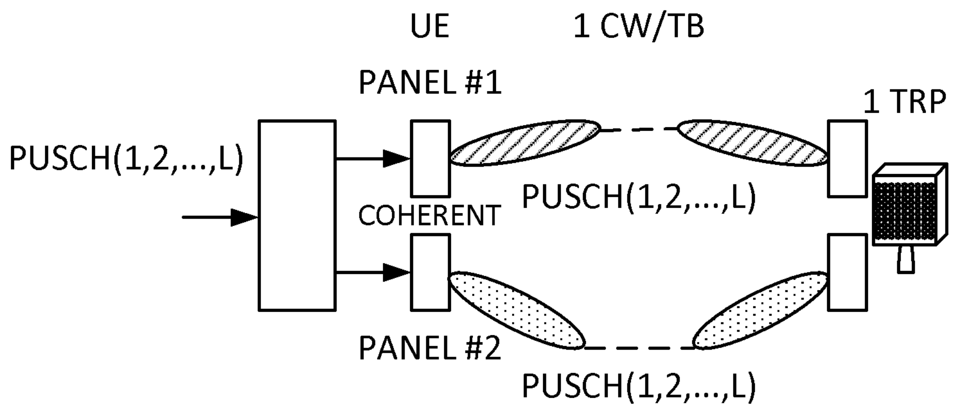


FIG. 3B

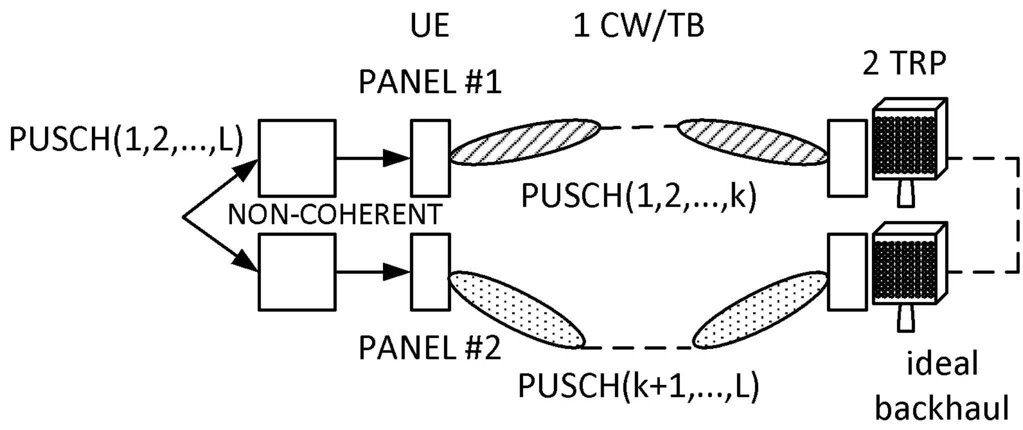


FIG. 3C

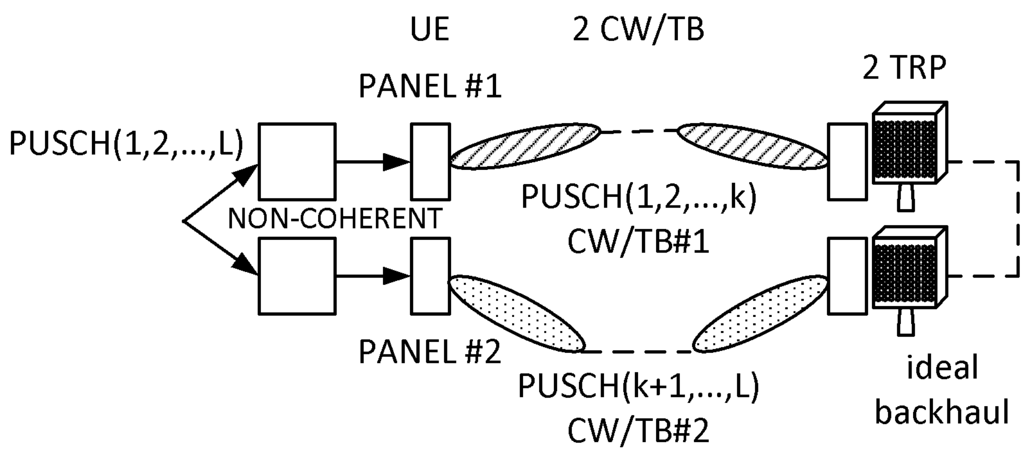

| Bit field mapped to index | SRS resource set indication |
|---|---|
| 0 | SRS resource indicator field and Precoding information and number of layers field are associated with the first SRS resource set;<br>Second SRS resource indicator field and Second Precoding information field are reserved. |
| 1 | SRS resource indicator field and Precoding information and number of layers field are associated with the second SRS resource set;<br>Second SRS resource indicator field and Second Precoding information field are reserved. |
| 2 | SRS resource indicator field and Precoding information and number of layers field are associated with the first SRS resource set;<br>Second SRS resource indicator field and Second Precoding information field are associated with the second SRS resource set. |
| 3 | SRS resource indicator field and Precoding information and number of layers field are associated with the first SRS resource set;<br>Second SRS resource indicator field and Second Precoding information field are associated with the second SRS resource set. |
| NOTE 1: The first and the second SRS resource sets are respectively the ones with lower and higher srs-ResourceSetId of the two SRS resources sets configured by higher layer parameter srs-ResourceSetToAddModList or srs-ResourceSetToAddModListDCI-0-2, and associated with the higher layer parameter usage of value 'nonCodeBook' if txConfig=nonCodebook or 'codebook' if txConfig=codebook. When only one SRS resource set is configured by higher layer parameter srs-ResourceSetToAddModList or srs-ResourceSetToAddModListDCI-0-2, and associated with the higher layer parameter usage of value 'codebook' or 'nonCodeBook' respectively, the first SRS resource set is the SRS resource set. The association of the first and second SRS resource sets to PUSCH repetitions for each bit field index value is as defined in Clause 6.1.2.1 of [6, TS 38.214].<br>NOTE 2: For DCI format 0_2, the first and second SRS resource sets configured by higher layer parameter srs-ResourceSetToAddModListDCI-0-2 are composed of the first $N_{SRS,0_2}$ SRS resources together with other configurations in the first and second SRS resource sets configured by higher layer parameter srs-ResourceSetToAddModList, if any, and associated with the higher layer parameter usage of value 'codebook' or 'nonCodeBook', respectively, except for the higher layer parameters 'srs-ResourceSetId' and 'srs-ResourceIdList'. | |

FIG. 4

| Bit field mapped to index | SRS resource set indication |
|---|---|
| 0 | Single panel Tx associated with 1st panel/1st SRS resource set |
| 1 | Single panel Tx associated with 2nd panel/2nd SRS resource set |
| 2 | STxMP SDM scheme |
| 3 | Reserved |

FIG. 5

FIG. 6A

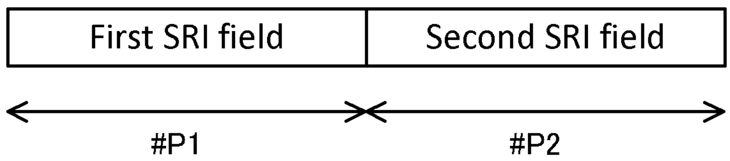
First SRI field
Second SRI field
#P1
#P2

FIG. 6B

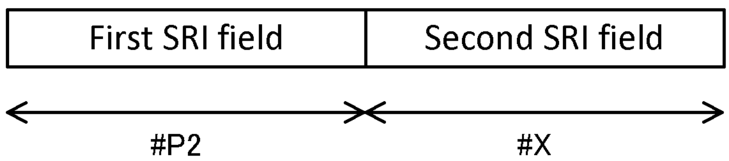
First SRI field
Second SRI field
#P2
#X

FIG. 7A

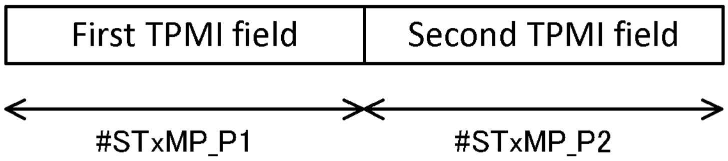


FIG. 7B

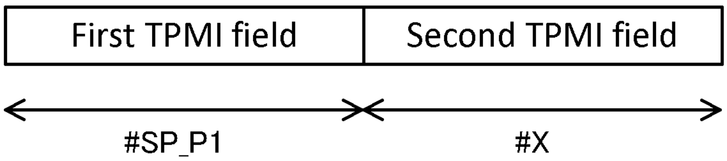


FIG. 7C

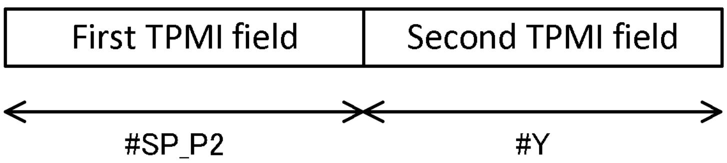

FIG. 8A

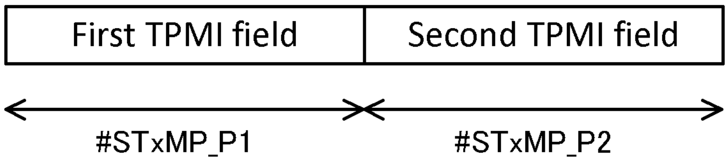


FIG. 8B

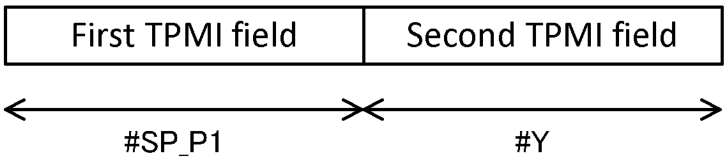


FIG. 8C

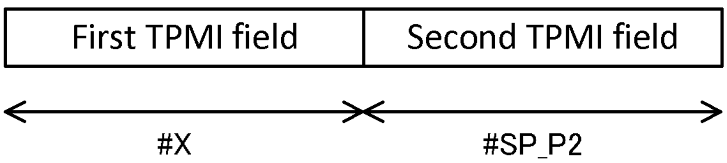

FIG. 9A

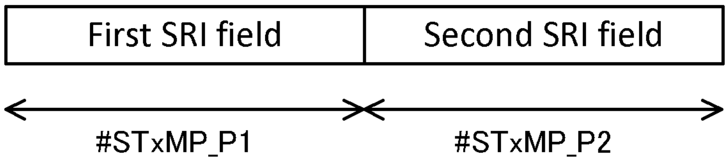


FIG. 9B

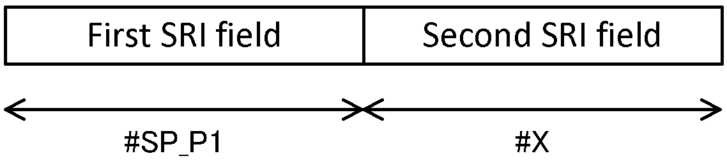


FIG. 9C

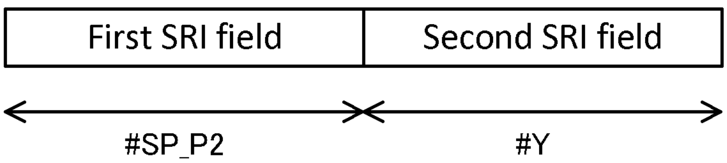

FIG. 10A

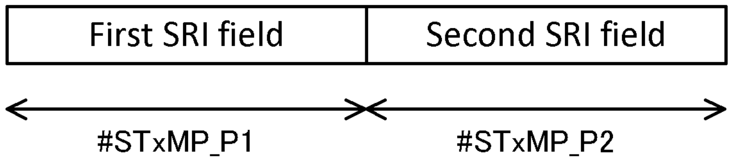


FIG. 10B

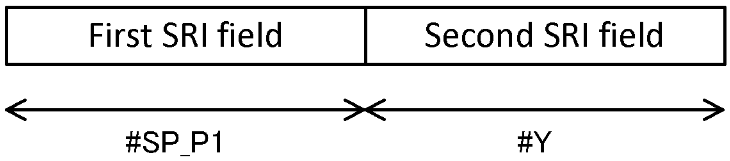


FIG. 10C

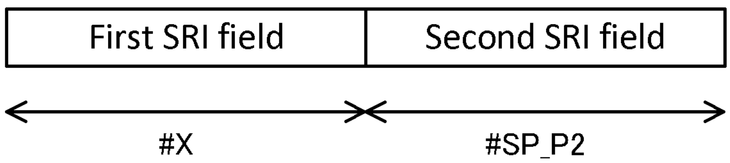

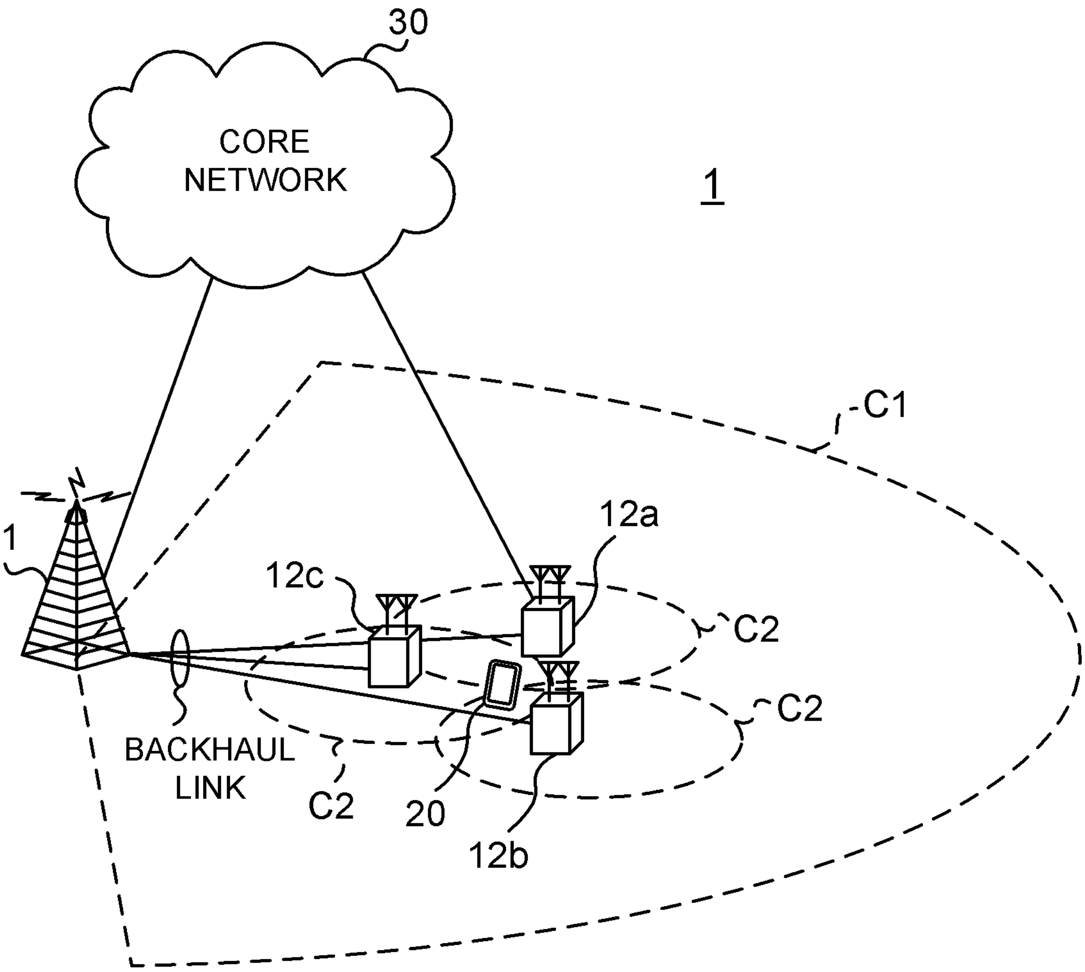


FIG. 11

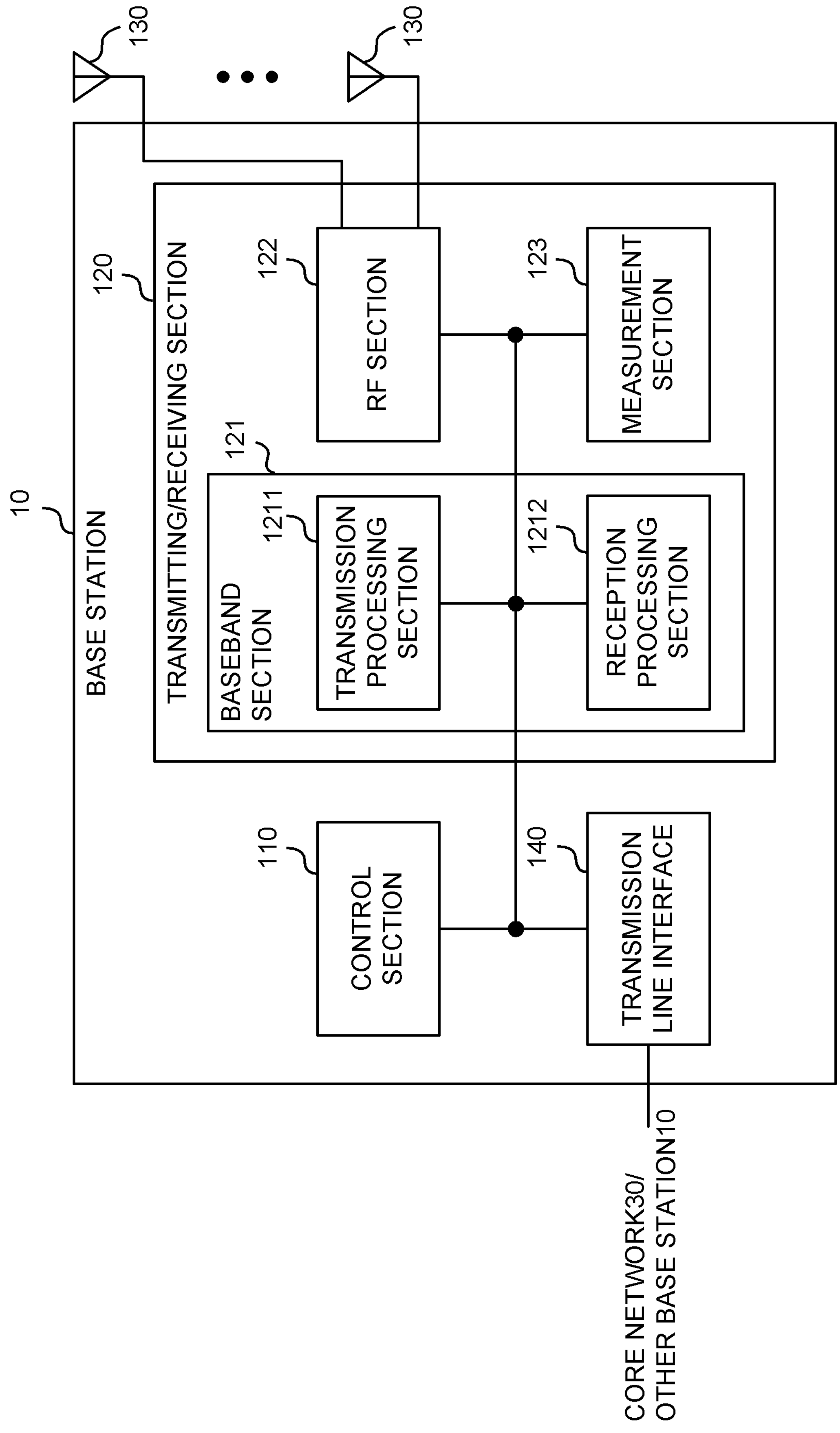
130
130
10
BASE STATION
120
TRANSMITTING/RECEIVING SECTION
122
RF SECTION
123
MEASUREMENT SECTION
121
BASEBAND SECTION
1211
TRANSMISSION PROCESSING SECTION
1212
RECEPTION PROCESSING SECTION
110
CONTROL SECTION
140
TRANSMISSION LINE INTERFACE
CORE NETWORK30/
OTHER BASE STATION10

FIG. 12

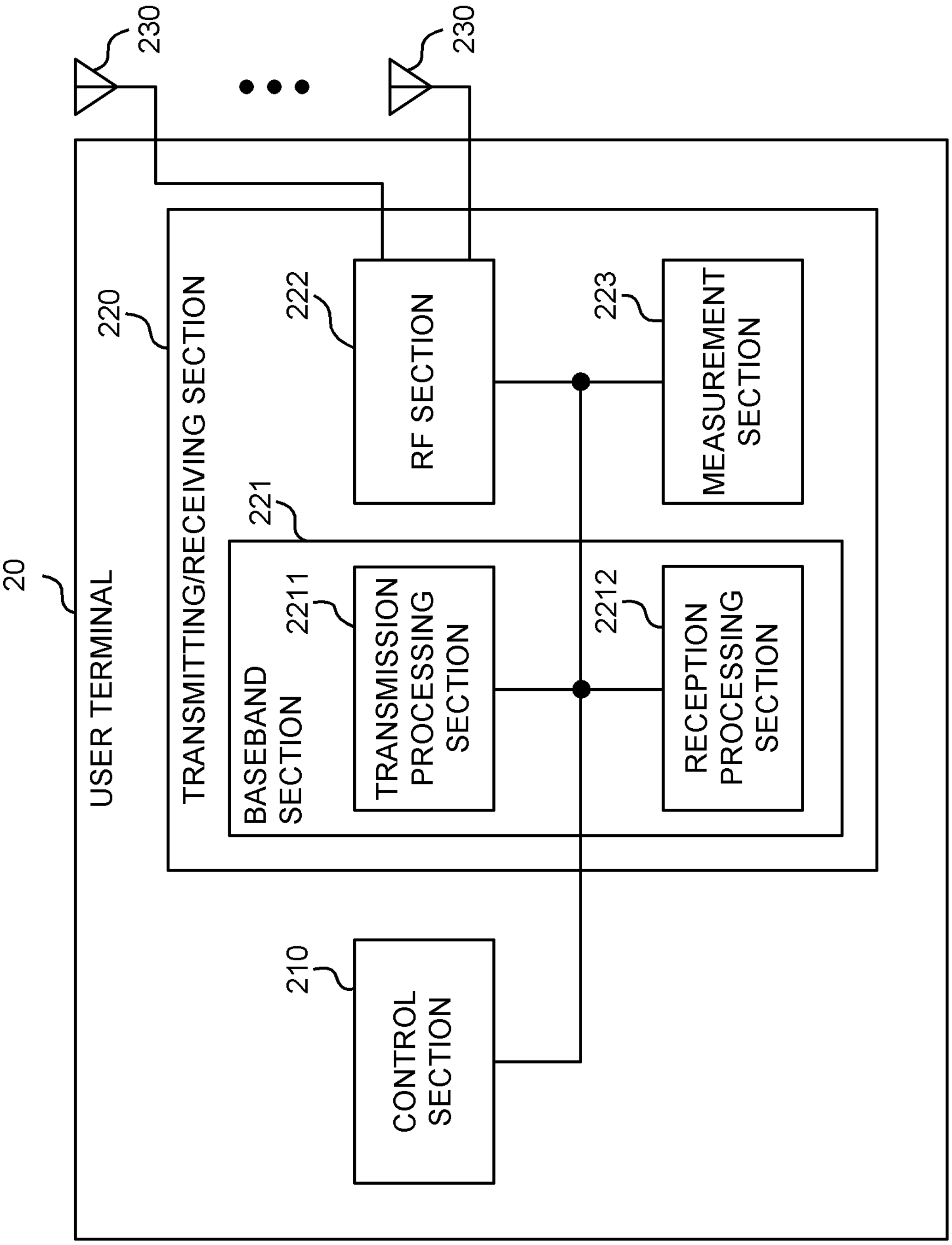
230
230
20
USER TERMINAL
220
TRANSMITTING/RECEIVING SECTION
222
RF SECTION
223
MEASUREMENT SECTION
221
BASEBAND SECTION
2211
TRANSMISSION PROCESSING SECTION
2212
RECEPTION PROCESSING SECTION
210
CONTROL SECTION

FIG. 13

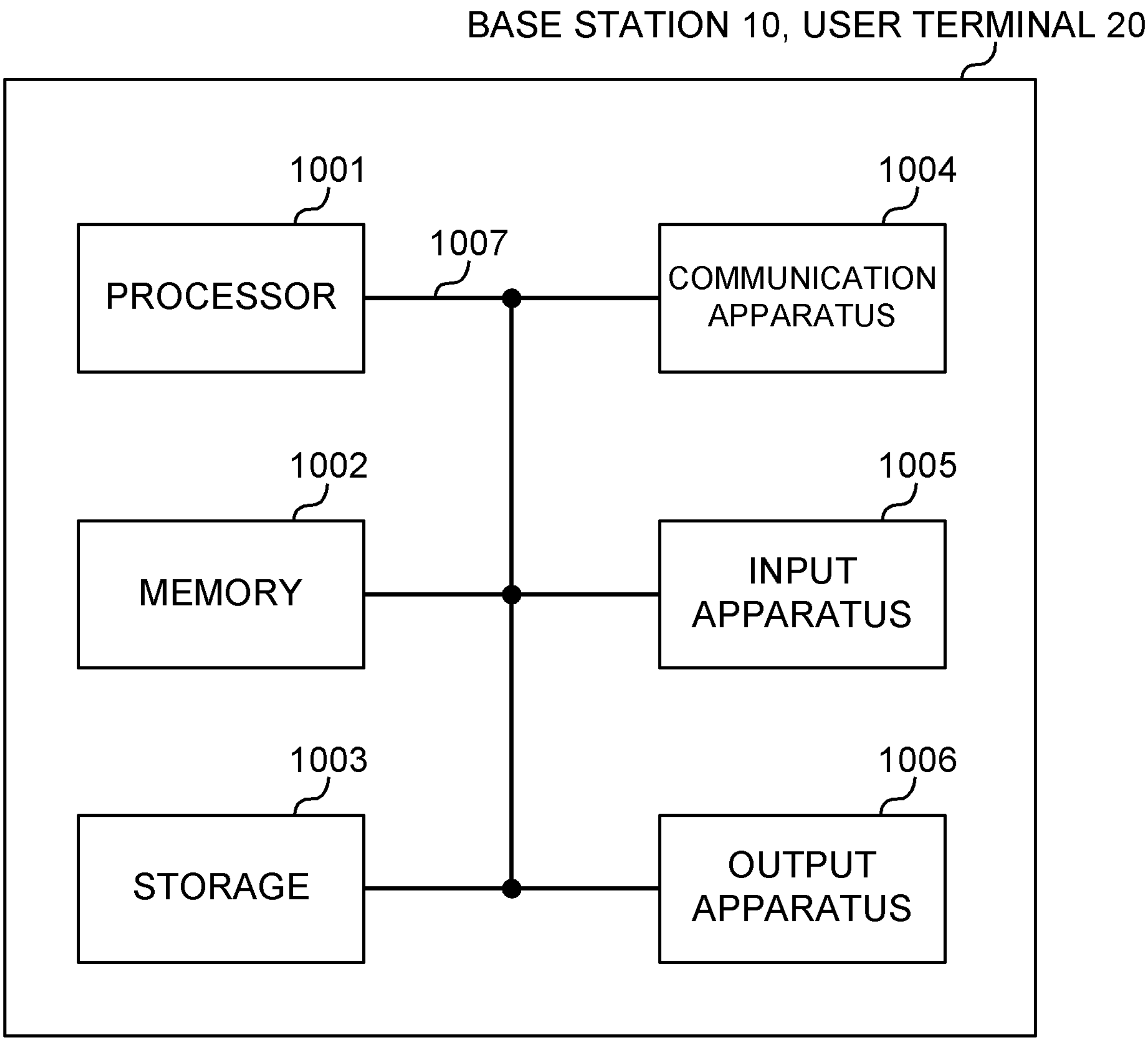
BASE STATION 10, USER TERMINAL 20
1001
PROCESSOR
1007
1004
COMMUNICATION APPARATUS
1002
MEMORY
1005
INPUT APPARATUS
1003
STORAGE
1006
OUTPUT APPARATUS

FIG. 14

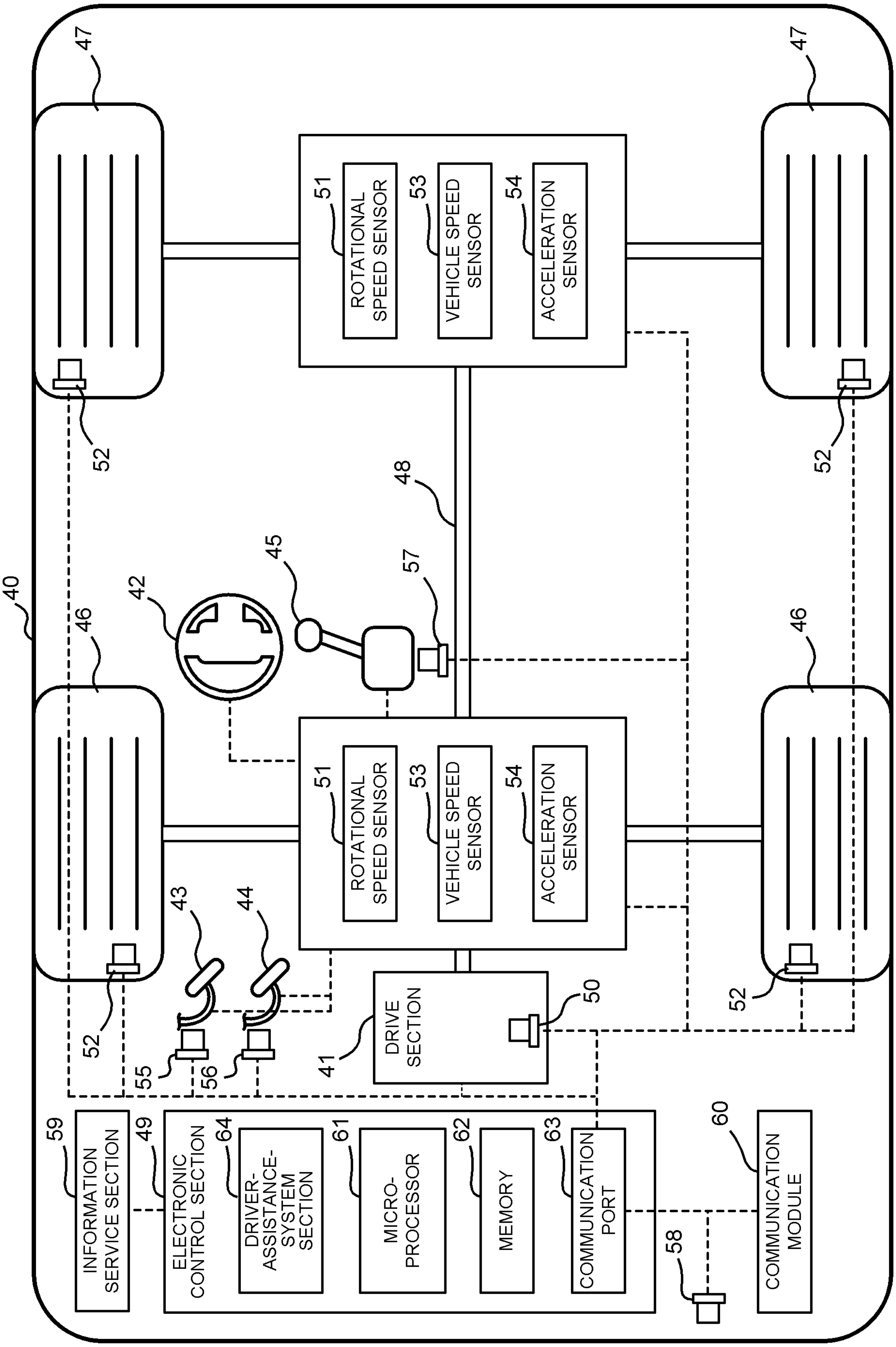
40
41
DRIVE SECTION
42
43
44
45
46
47
48
49
ELECTRONIC CONTROL SECTION
50
51
ROTATIONAL SPEED SENSOR
52
53
VEHICLE SPEED SENSOR
54
ACCELERATION SENSOR
55
56
57
58
59
INFORMATION SERVICE SECTION
60
COMMUNICATION MODULE
61
MICRO-PROCESSOR
62
MEMORY
63
COMMUNICATION PORT
64
DRIVER-ASSISTANCE-SYSTEM SECTION

FIG. 15

**INTERNATIONAL SEARCH REPORT**

International application No.
**PCT/JP2022/041226**

**A. CLASSIFICATION OF SUBJECT MATTER**

***H04B 7/06***(2006.01)i; ***H04J 99/00***(2009.01)i
FI: H04B7/06 890; H04J99/00

According to International Patent Classification (IPC) or to both national classification and IPC

**B. FIELDS SEARCHED**

Minimum documentation searched (classification system followed by classification symbols)

H04B7/06; H04J99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | QUALCOMM INCORPORATED. Simultaneous multi-panel transmission[online], 3GPP TSG RAN WG1 #110b-e R1-2209972, 30 September 2022, pp. 1-18, [retrieval date 16 May 2023] pp. 6-9 | 1–6 |
| X | SAMSUNG. Views on UL precoding indication for STxMP[online], 3GPP TSG RAN WG1 #110b-e R1-2209719, 30 September 2022, [retrieval date 16 May 2023] section 2.2, proposal 4 | 1, 5- |
| A | NTT DOCOMO, INC. Discussion on multi-panel transmission[online], 3GPP TSG RAN WG1 #110b-e R1-2209893, 30 September 2022, pp. 1-12, [retrieval date 16 May 2023] proposals 2.4, 2.5 | 1-6 |
| A | MEDIATEK INC. Simultaneous transmission across multiple UE panels[online], 3GPP TSG RAN WG1 #110b-e R1- 2209496, 30 September 2022, [retrieval date 16 May 2023] section 2.1.2 | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 May 2023** | **30 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010